# EUROPEAN PATENT APPLICATION

(11) **EP 4 254 336 A1**
(43) Date of publication of application: **04.10.2023**
(21) Application number: 22165304.1
(22) Date of filing: 30.03.2022
(51) Int. Cl.: G06T 7/73

(54) **A COMPUTER IMPLEMENTED METHOD FOR LOCATING AN ELECTRONIC DEVICE IN A COORDINATE SYSTEM**

(71) Applicant: Auki Labs AG, 6300 Zug (CH)
(72) Inventor: Östrem, Ted, New Taipei City (TW); Steinberger, John, 1213 Geneva (CH); Zolna, Dariusz, 31-242 Krakow (PL); Pihl, Gustav, 371 54 Karlskrona (SE); Pihl, Nils, 26452 Ljungbyhed (SE)
(74) Representative: AWA Sweden AB

(57) **Abstract**

The present invention relates to a computer implemented method (200) for determining a position and orientation of an electronic device in a coordinate system. The method (200) comprising: capturing (S202), by a camera of the electronic device, an image of a reference object; extracting (S204) from the image of the reference object an address where to access a domain comprising information pertaining to: a position and orientation of one or more reference objects in the coordinate system, and known physical dimensions and appearance of the one or more reference objects; for the reference object, obtaining (S208), by accessing the domain, the position and orientation in the coordinate system and the known physical dimensions and appearance; determining (S210) a relative distance and orientation of the electronic device to the reference object based on the known physical dimensions and appearance of the reference object and apparent dimensions and appearance of the reference object as imaged in the captured image; and determining (S212) the position and orientation of the electronic device in the coordinate system based on the position and orientation of the reference object in the coordinate system and the determined relative distance and orientation of the electronic device to the reference object.

## Description

### Technical field

The present invention relates to the field of positioning. More particularly, it relates to a method for determining a position and orientation of an electronic device in a coordinate system and a system thereof.

### Background of the invention

Many applications in industry and entertainment, such as mapping, warehouse management and gaming, require rapid and precise positioning of camera-enabled devices such as smartphones in coordinate systems that could be either local or global. The GPS (global positioning system) offers an often unsatisfactory or incomplete solution to this problem, due to limited precision and even worse precision indoors. Many applications require one or two orders of magnitude better precision than GPS, for example down to centimeter or millimeter scales, and need to work indoors as well as outdoors. Moreover, many applications require not only the accurate computation of (relative) three-dimensional position but also of the device's (relative) three-dimensional orientation in space, with a potentially equally high degree of precision. Moreover, many applications can make do with local positioning, and are not intrinsically interested in global positioning.

Moreover, yet another type of application is not intrinsically interested in the positioning of a device relative to a local environment but is interested in the relative positioning of devices with respect to one another. Such applications might include joint AR (augmented reality) experiences or robotics. In the case of AR, in particular, there is a need for improvements to allow two previously-mutually-unaware camera-enabled devices to rapidly and precisely determine their positions and orientations within a shared space, or, notwithstanding, to rapidly and precisely determine their relative positions and orientations.

However, there are limitations with today's technology in regard to sharing the virtual or partly virtual world between users. In the case of augmented reality, in particular, there is a need for improvements to allow camera-enabled devices to rapidly, precisely, and securely determine their relative positions and orientations within a shared space, and to rapidly, precisely and securely determine their position and orientation within a local, physically-determined coordinate system in which zero or more augmented reality assets may be embedded.

### Summary of the invention

In view of the above, it is an object of the present invention to provide a method for locating an electronic device in a coordinate system. In particular, the method may be a method for locating a camera-enabled device in a coordinate system via a centralized domain (e.g., a remote server).

Specifically, the inventors of the present inventive concept have realized a way of utilizing real-world reference objects as a way of anchoring virtual worlds onto the real-world, together with a cloud based system for achieving an effective, secure, and accurate way of tracking relative and absolute positions and orientations of electronic devices navigating those virtual worlds, with respect to the virtual world's own local coordinate system or shared global coordinate system, and of relaying said positions and orientations back to the devices on a per-need basis. In other words, the method allows camera-enabled devices to position themselves in a local coordinate system with the help of a centralized domain. The coordinate system need not be defined relative to a fixed landmark and may instead be determined by another electronic device.

An advantage of the method is that it is geometrically agnostic and privacy-preserving in the sense that it does not necessitate the two devices to have knowledge of each other's geometry beforehand, or to establish an electronic handshake at the moment of execution. A first device may also enable a second device to learn the second device's position and orientation in a local coordinate system (more specifically, in any coordinate system with respect to which the position and orientation of the first device is already known) in a fashion that does not necessitate any a priori familiarity between the two devices, or for the two devices to establish an electronic handshake or to exchange messages on the spot.

The present method is rapid, functions indoors as well as outdoors, offers high positional accuracy compared for example to GPS, and offers the possibility of deployment and maintenance via crowdsourcing.

According to a first aspect, a computer implemented method for determining a position and orientation of an electronic device in a coordinate system is provided. The method comprises: capturing, by a camera of the electronic device, an image of a reference object; extracting from the image of the reference object an address where to access a domain comprising information pertaining to: a position and orientation of one or more reference objects in the coordinate system, and known physical dimensions and appearance of the one or more reference objects; for the reference object, obtaining, by accessing the domain, the position and orientation in the coordinate system and the known physical dimensions and appearance; determining a relative distance and orientation of the electronic device to the reference object based on the known physical dimensions and appearance of the reference object and apparent dimensions and appearance of the reference object as imaged in the captured image; and determining the position and orientation of the electronic device in the coordinate system based on the position and orientation of the reference object in the coordinate system and the determined relative distance and orientation of the electronic device to the reference object.

The method may further comprise locating the electronic device in the coordinate system at a position and orientation corresponding to the determined position and orientation of the electronic device in the coordinate system. Thus, the method may be a method for locating the electronic device in the coordinate system.

In the above, the term "coordinate system" may be interpreted as a right-handed set of cartesian axes positioned and oriented in a specific fixed relation to a physical object. A coordinate system might bear some association with a given surrounding physical region or area or might not have any a priori such association. For example, a coordinate system may be affixed to a building, and the associated region might be the building itself, or a neighborhood containing that building, or an entire town, city, or a larger geographical area. A coordinate system could also be affixed to a moveable physical object. For example, a coordinate system could be affixed to a cargo container, with the associated region being the interior of the container, or affixed to the camera of an electronic device, with no association to any a priori region surrounding the device. The coordinate system may be a global coordinate system or a local coordinate system. The coordinate system may be a sub-coordinate system to another coordinate system. By the wording "locating" as in "locating the electronic device in the coordinate system", it is herein meant determining a specific position and orientation at which the electronic device should be arranged in the coordinate system and arranging the electronic device at the determined position and orientation. In other words, locating the electronic device may be seen as establishing the electronic device in the coordinate system at the determined position and orientation. Put differently, it may be seen as calibrating the electronic device in regard to the coordinate system. Hence, the method allows the electronic device to locate itself within such a coordinate system as described above by use of the reference object located in the environment covered by the coordinate system.

The term "locating" may be interpreted as determining the position and orientation of one coordinate system with respect to another. By extension, it may mean determining the position and orientation of a physical object in a coordinate system in the sense of locating a default coordinate system affixed to the object with respect to the former coordinate system. In particular, as a skilled person would know, a coordinate system is located with respect to another if and only if there exists a succinctly encodable and efficiently computable function that converts the cartesian coordinates points in space as expressed in one coordinate system to the cartesian coordinates of points in space as expressed in the other coordinate system. We may refer to either this function or its encoding as a "coordinate transform". Hence, the electronic device may be located in the coordinate system by determining a position and orientation of a local coordinate system of the electronic device in relation to the coordinate system in which the electronic device is to be located.

The term "address" is to be interpreted as a link or pointer indicating where to access the domain. The domain may be understood as an online database, or centralized hub, accessed via a proprietary or public API. The database might also be distributed. In some cases, fragments of the database may be directly duplicated within the code of a reference object, subject to space constraints. The latter may for example be particularly easy to do if the reference object is generated by an online electronic device that can communicate with the domain and edit its appearance in an ongoing fashion. A domain may be associated to a default local coordinate system, to be referred to as "the domain's default coordinate system". The domain may host and/or manage the coordinate system. The domain may for example be a remote server, such as a cloud implemented server. The domain may further host or manage virtual spaces, i.e., AR worlds, in the coordinate system. The domain may comprise information pertaining to virtual objects shown in the virtual space. The reference objects are to be interpreted as physical real-world objects. Each reference object has known physical dimensions and appearance in the real-world. More specifically, the reference objects may be located in the environment which the coordinate system covers. Further, each reference object may have a known position and orientation in the real-world. The known position and orientation of the reference objects may be GPS coordinates and orientation in relation to the real-world. Alternatively, the known position and orientation of the reference objects may be known in relation to other real-world objects. For instance, it may be a position and orientation in relation to a building, a room or other reference objects. In addition, each reference object is associated with a position and orientation in the coordinate system. Hence, the reference objects may serve as anchors between the real-world and the coordinate system. The reference objects may be reference markers. The reference objects may be machine-readable optical tag, such as a QR code or barcode, printed or appearing at a fixed position on a rigid surface or may consist of any material with a non-malleable geometry. The surface may be the screen or display of an electronic device. It may be assumed that a reference object may appear on an opaque surface with a well-defined outward normal or, if printed on glass, may have a commonly recognizable geometry that disambiguates an "outside view" from an "inside view" of the reference object. It may also be assumed that a unique coordinate system may be associated to each reference object by the use of a default set of conventions that depends only on the broad type of reference object. For example, for a QR code printed on a flat surface, the axes of the coordinate system might be positioned at the top left of the QR code, in the common "upright" view of the QR code, with the axes direction determined by the plane containing the QR code and the orientation of the QR code therein. By "the coordinate system of a reference object" or "the reference object's coordinate system" it is meant the latter unique coordinate system associated to the reference object, as determined by the chosen conventions.

An optical tag may comprise digital content. The digital content may be referred to as the "code" of the reference object. The code of a reference object may comprise any subset of: (i) a "reference object type" id; (ii) a reference object unique id; (iii) a domain address; (iv) arbitrary metadata, such as fragments of the data stored on the domain or other human-readable or arbitrary data (subject to space constraints). For reference objects printed on digital displays or on e-ink displays it is assumed that the third and fourth types of content may change over time, but not the first or second types (or else one considers the two reference objects, as appearing at different points in time, to be distinct).

The reference object type id may identify what type of reference object it is. The reference object unique id, or just reference object identification, may be a unique identifier of the reference object.

The physical dimensions and appearance of a reference object may comprise any dimensions data of the reference object. By this it is meant any type of data, as encoded under some agreed-upon format, that enables the true physical dimensions and appearance or shape of a reference object to be recovered from a purely two-dimensional image of the reference object, as captured by an imaging device under a generic angle, absent any further context or imagery. For example, if the reference object is a QR code printed on a flat surface, the dimensions data may be the side length of the QR code measured in meters (i.e., a single number). If the reference object is a barcode printed on a flat surface, the dimensions data may be either the height or width of the barcode, or both. If the reference object is a QR code printed on a cylindrical surface, such data might comprise that selfsame piece of information (i.e., the presence of a cylindrical surface), the radius of the cylinder, the side length of the QR code, and the angle of the QR code's vertical axis with respect to the cylinder's principal axis etc. Thus, the variety and sophistication of the dimensions data is to be broadly understood as a function of the variety of surfaces that are to be used as substrates for reference objects. It may be assumed that two reference objects with the same reference object type id may share the same dimensions data. In particular, the central domain may relate the dimensions data of a reference object to an electronic device by being given only the reference object type id of the reference object.

By "image of the reference object" or "appearance of the reference object" it is meant a rasterized, two-dimensional image, or series thereof, captured by the electronic device's camera of the reference object, from a generic angle and distance, as would for example allow the device to parse the reference object's machine-readable content.

As the skilled person would realize, the image of a reference object, in conjunction with the dimensions data of the reference object, determines the location of a device's camera with respect to the reference object's coordinate system. In more detail, these two pieces of information may jointly determine the coordinate transform from the reference object's coordinate system to a coordinate system that is affixed to the device's camera. This coordinate transform may also determine the location of the device in the reference object's coordinate system.

One can say that an electronic device "scans" a reference object when it obtains the reference object's code via an image of its own camera. Thus, by scanning a reference object, a device will obtain the reference object type id of the reference object, if such an id is present.

In the given system, the domain API may include a functionality for obtaining, given a reference object type id, the corresponding dimensions data for that reference object type id. The domain API may also include a functionality for obtaining the position and orientation of the reference object in the domain's default coordinate system by providing the reference object's unique id.

Thus, a device that scans a reference object may learn, by either a priori or posteriori (i.e., through the scanning) knowledge of the domain address, and possibly by making an API call to the domain address, the dimensions data (i.e. the known physical dimensions and appearance) of the reference object. It may also learn the position and orientation of the reference object in the domain's default coordinate system through the same API. By mathematically composing the two locations (i.e., coordinate transforms), a device may thus learn its own position and orientation in the domain's default coordinate system.

By the wording "known", as in "known physical dimensions and appearance", it is hereby meant that the physical dimensions and appearance is pre-determined. Put differently, the reference object has physical dimensions and appearance which are known in advance such that they can be compared to the apparent dimensions and appearance of the imaged reference object.

By the wording "apparent", as in "apparent dimensions and appearance", it is hereby meant the dimensions and appearance as they appear when imaged by the camera of the device, or by other sensors (such as LIDAR). In other words, the apparent dimensions and appearance of the reference object may differ from the known physical dimensions and appearance.

The orientation of the electronic device (or the reference object) may comprise information about how the electronic device (or the reference object) is rotated in relation to the coordinate system.

The known appearance may for example comprise a shape and/or a pattern of the reference object. The known appearance may comprise information pertaining to the orientation of the reference object. As an example, the appearance may comprise information about how the reference object is rotated.

As the skilled person would realize, if an object with known physical dimensions and appearance is imaged by a device, a relative distance and orientation of the device to the object can be determined by comparing the known physical dimensions and appearance of the object against the apparent dimensions and appearance of the object. This may be achieved in a simple and accurate way by providing the reference objects as objects with well-defined characteristics, i.e., well-defined dimensions and appearance. For instance, as two-dimensional objects with clear borders.

A possible advantage of the proposed method is the high accuracy of optical positioning, compared for example to GPS positioning. Another possible advantage applies to indoors use, where GPS positioning is even more imprecise. Another feature of the method it that it requires no peer-to-peer communication sessions, but only device-to-domain communication sessions, which enhances privacy, on the one hand, but also increases usability and scalability, on the other hand, since each device only needs to be able to communicate with one type of entity (namely, the domain) rather than with several different types of entities (a variety of other devices).

Further significant use cases and advantages of the method can be found, as arise through naturally implemented extensions and modifications, as described below. As a non-limiting use case described below, in particular, two or more previously unknown devices may enter into a highly accurate shared augmented reality (AR) experience without having to perform an electronic handshake and without access to a preexisting reference object in their vicinity.

Further, a reference object may serve as a reference object for several different coordinate systems at once. For example, a reference object located in a mall may serve as a reference object for a coordinate system of the mall, as well as for a coordinate system of a city where the mall is located.

Lastly, the domain allows for a simple, resilient, and malleable scheme for growing the network of reference objects, since the information stored in the domain can easily be updated. In other words, reference objects may be added and/or removed by updating the information stored in the domain.

In a non-limiting example, the proposed method may allow the electronic device to be located in an augmented reality world using the coordinate system.

The method may further comprise connecting the electronic device to a virtual space, defined by the coordinate system, at the determined position and orientation in the coordinate system. The electronic device being connected to the virtual space may allow the device to view and interact with the virtual space.

The virtual space may be a partly virtual or mixed reality world, such as an augmented reality world. I.e., the virtual space may be the virtual part of an augmented reality world. However, it should be noted that the partly or mixed reality world that the user experiences may be entirely virtual from a visual point of view, but still anchored to the real-world. For example, real-world objects may be overlapped with virtual objects. The virtual space may be a pre-existing virtual space. I.e., the virtual space may exist prior to the electronic device being connected to the virtual space.

The virtual space being "defined by" the coordinate system may be interpreted as the virtual space being present in the coordinate system or anchored to the coordinate system. In other words, the virtual space may utilize the coordinate system as a frame of reference. The virtual space may have its own relative coordinate system. The relative coordinate system may be the sub-coordinate system of a larger coordinate system as described above. Connecting the electronic device to the virtual space may be seen as locating the electronic device in the relative coordinate system of the virtual space.

The domain may host a plurality of virtual spaces. Each virtual space of the plurality of virtual spaces may be defined by the coordinate system. In other words, the coordinate system may be a common coordinate system to the plurality of virtual spaces. The method may further comprise determining to which virtual space among the plurality of virtual spaces the electronic device is to be connected.

Allowing the domain to host a plurality of virtual spaces allows the same coordinate system to be utilized to a greater extent. Further, having the plurality of virtual spaces defined by the same coordinate system and hosted by the same domain facilitates a simplified process of connecting to the virtual space that the electronic device (or the user of the electronic device) so chooses.

The method may further comprise extracting from the image of the reference object a reference object identification. Obtaining the position and orientation as well as the known physical dimensions and appearance may comprise sending the reference object identification to the domain. The reference object identification may be used to access the correct properties (i.e., the position and orientation, as well as the known physical dimensions and appearance of the reference object) in the domain that corresponds to the reference object.

The domain may comprise a database having entries for a plurality of reference objects, wherein each entry comprises a reference object identification, a position and orientation in the coordinate system of the corresponding reference object and known physical dimensions and appearance of the corresponding reference object. Obtaining the position and orientation as well as the known physical dimensions and appearance may further comprise accessing the entry in the database corresponding to the reference object identification.

According to a second aspect, a system for allowing an electronic device to be located in a coordinate system is provided. The system comprising: a plurality of reference objects each having: a reference object identification, and known physical dimensions and appearance; and a domain hosting the coordinate system, the domain being associated with an address and comprising a database having entries for the plurality of reference objects, wherein each entry comprises the reference object identification, a position and orientation in the coordinate system of the corresponding reference object, and the known physical dimensions and appearance of the corresponding reference object; wherein each reference object further comprises the address to the domain.

The system allows the electronic device to be located in the coordinate system by the method described above according to the first aspect.

A possible associated advantage of how the electronic device can be located in the coordinate system is that multiple electronic devices may be located in the coordinate system without having to communicate with each other. This may be advantageous in that the process of locating and/or connecting the electronic devices becomes simpler, since the electronic devices need not to connect to each other. For the same reason, the process also becomes more secure.

The plurality of reference objects may be reference objects located at various locations in the real-world. Having multiple reference objects spread out in the real-world allows the electronic device to connect to the coordinate system at any location where a reference object is located, by capturing an image of the reference object.

The plurality of reference objects may be nontemporal or permanent.

The plurality of reference objects may be machine-readable optical labels. The machine-readable optical labels may for instance be two dimensional codes, such as QR-codes.

The domain may host a plurality of virtual spaces all being defined by the coordinate system. A reference object of the plurality of reference objects may be associated with one or more virtual spaces of the plurality of virtual spaces.

The domain may be configured to keep track of a plurality of electronic devices in each virtual space.

By the wording "keep track of" it is hereby meant keeping track of the position and orientation of the electronic devices as they are moved around. Keeping track of the plurality of electronic devices connected to the virtual space may be performed by receiving movement data from the plurality of electronic devices. The movement data may for example be obtained from accelerometers and gyroscopes of each electronic device.

The domain may be configured to keep track of a plurality of coordinate systems, including coordinate transforms between pairs of such.

The system may further comprise a temporal reference object displayed on a display of an electronic device located in the coordinate system, wherein the temporal reference object may have a reference object identification, known physical dimensions and appearance, as well as the address to the domain, and wherein the database may further have an entry for the temporal reference object, wherein the entry may comprise the reference object identification of the temporal reference object, a position and orientation in the coordinate system of the temporal reference object, and the known physical dimensions and appearance of the temporal reference object as displayed on the display of the electronic device. The entry of the temporal reference object may further comprise a virtual space identification identifying a virtual space that the device is connected to.

A possible associated advantage is that if no nontemporal reference objects are available, an electronic device which is already located in the coordinate system may display the temporal reference object to let the electronic device to be located in the coordinate system capture an image of the temporal reference object instead.

The above-mentioned features of the first aspect, when applicable, apply to this second aspect as well. In order to avoid undue repetition, reference is made to the above.

According to a third aspect, a non-transitory computer-readable recording medium is provided. The non-transitory computer-readable recording medium having recorded thereon program code portion which, when executed at a device having processing capabilities, performs the method according to the first aspect.

The program code portion may be an application downloadable to the electronic device via an application providing service. Parts of the program code portions may be performed at the domain.

The above-mentioned features of the first and second aspects, when applicable, apply to this third aspect as well. In order to avoid undue repetition, reference is made to the above.

Still other objectives, features, aspects, and advantages of the invention will appear from the following detailed description as well as from the drawings. The same features and advantages described with respect to one aspect are applicable to the other aspects unless explicitly stated otherwise.

### Brief description of the drawings

The above and other aspects of the present inventive concept will now be described in more detail, with reference to appended drawings showing variants of the invention. The figures should not be considered limiting the invention to the specific variant; instead they are used for explaining and understanding the inventive concept.

As illustrated in the figures, the sizes of layers and regions are exaggerated for illustrative purposes and, thus, are provided to illustrate the general structures of variants of the present inventive concept. Like reference numerals refer to like elements throughout.
Fig. 1 schematically illustrates, a system for allowing an electronic device to be located in a coordinate system.
Fig. 2 is a flow chart illustrating the steps of a computer implemented method for locating an electronic device in a coordinate system.

### Detailed description

The present inventive concept will now be described more fully hereinafter with reference to the accompanying drawings, in which currently preferred variants of the inventive concept are shown. This inventive concept may, however, be implemented in many different forms and should not be construed as limited to the variants set forth herein; rather, these variants are provided for thoroughness and completeness, and fully convey the scope of the present inventive concept to the skilled person.

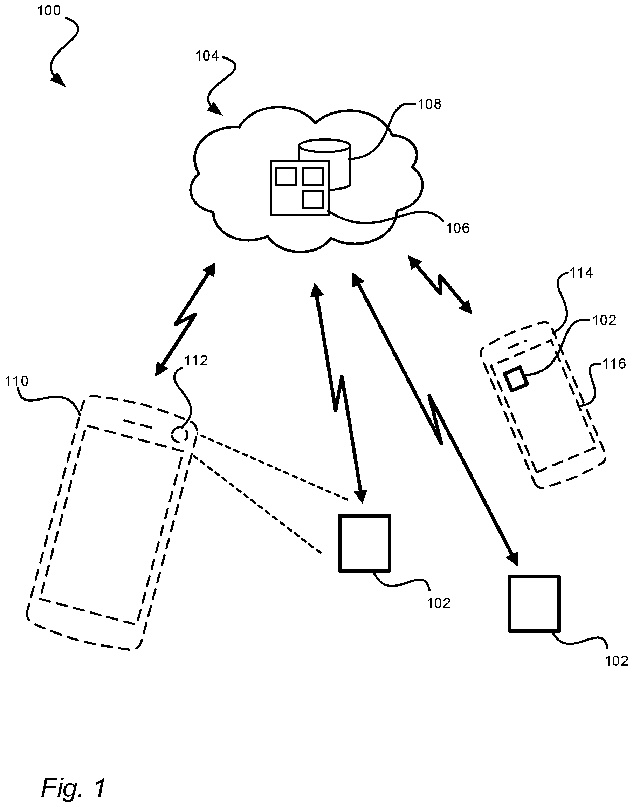

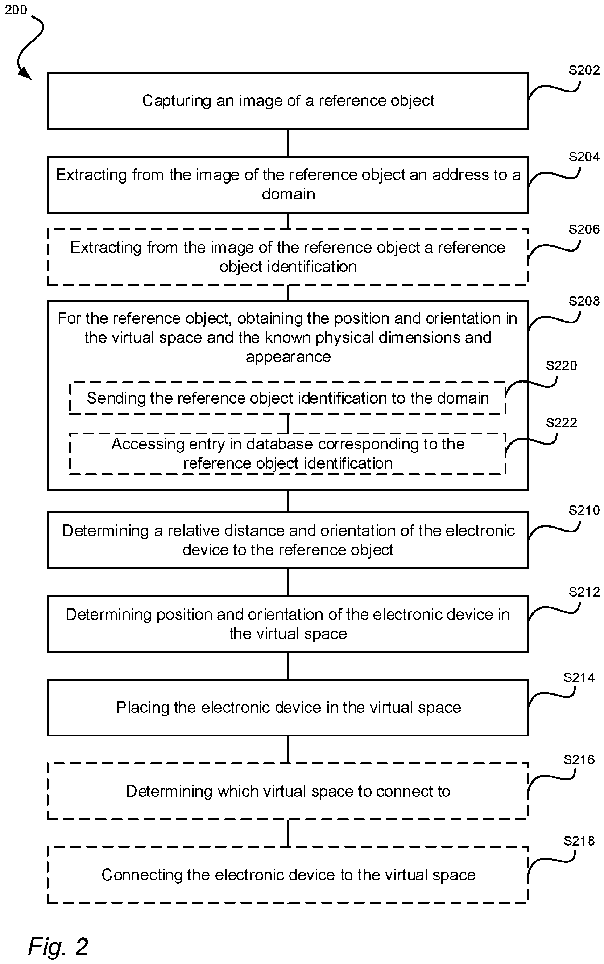

A computer implemented method for locating an electronic device in a coordinate system, as well as a system for allowing an electronic device to be located in a coordinate system will now be described with reference to Figure 1 and Figure 2.

Fig. 1 schematically illustrates a system 100 for allowing an electronic device 110 to be located in a coordinate system. It should be noted that the system 100 may allow multiple electronic devices to be located in the same coordinate system. Further, the system may allow multiple virtual spaces, e.g., augmented reality worlds, defined by the coordinate system to be hosted at the same time.

The system 100 comprises a plurality of reference objects 102. The plurality of reference objects 102 may be machine-readable optical labels. Hence, the reference objects 102 may be readable by an optical sensor of the electronic device 110, such as a camera 112 or a LIDAR sensor. The plurality of reference objects 102 may for example be QR-codes or barcodes. Any information encoded in the machine-readable optical label may be acquired by decoding the machine-readable optical label.

The plurality of reference objects 102 may be located at various locations in the real-world. As an example, the plurality of reference objects 102 may be spread out in an indoor or outdoor space, such as a train station, a city center, a park, a museum, a hotel etc.

One or more reference objects of the plurality of reference objects 102 may be nontemporal reference objects. Put differently, the reference objects 102 may be permanent reference objects. In Fig. 1, the system is illustrated as having two nontemporal reference objects 102, represented by the two rectangles illustrated separately from any electronic device. However, the system may comprise any number of reference objects 102. The reference objects 102 may be nontemporal in the meaning that they have a static position and orientation in the virtual space. Furthermore, the nontemporal reference objects 102 may be fixedly located on different surfaces. For example, the nontemporal reference objects 102 may be located on physical walls, objects, or other surfaces in the real-world. The reference objects 102 may be printed and thus permanent in the sense that they are not changeable. Alternatively, the reference objects may be displayed on changeable panels such as e-paper displays.

Alternatively, or in combination with above, one or more of the reference objects 102 of the plurality of reference objects 102 may be temporal reference objects 102. The reference objects 102 can be temporal in the sense that they may have a dynamic position and orientation in the virtual space (and the real-world), i.e., their position and orientation may change. Furthermore, the reference objects 102 may be temporal in that they may be created temporarily. As an example, a temporal reference object 102 may be a reference object displayed on a display 116 of an electronic device already located in the virtual space 114, as illustrated herein by the electronic device 114 in the right-hand side of Fig. 1. The temporal reference object 102 may thus serve the purpose of allowing the electronic device 110 that is to be located in the virtual space to utilize the electronic device already located in the virtual space 114, for instance when no nontemporal reference objects 102 are available.

Temporal reference objects, or changeable non-temporal reference objects may be updated to store information associated with the respective reference object which is otherwise stored in a domain (which is further described below). This may allow the reference objects to be used offline, i.e. independent of the domain, which may be advantageous e.g. if the domain may be un-accessible.

Each reference object 102 of the plurality of reference objects (both temporal and nontemporal) may have a reference object identification associated therewith. The reference object identification may be used as a unique identifier of the corresponding reference object. The reference object identification may be encoded in the machine-readable optical label which may constitute the reference object 102. The reference object identification may be a unique numerical, alphabetical, or alphanumerical string. For instance, the reference object identification may be a HTML URL code.

Each reference object 102 of the plurality of reference objects may have known physical dimensions and appearance associated therewith. The known physical dimensions and appearance of the reference object may be encoded in the machine-readable optical label which may constitute the reference object 102. Hence, the known physical dimensions and appearance of the reference object may be obtained from the reference object directly, without having to communicate with a domain (which is further described below). By the term "known", as in "known physical dimensions and appearance", it is hereby meant that the physical dimensions and appearance is pre-determined. Put differently, the reference object 102 may have physical dimensions and appearance which is known in advance such that it can be compared to apparent dimensions and appearance of the reference object as imaged in a captured image of the reference object 102. The appearance may for example comprise a shape and/or a pattern of the reference object 102. The appearance may comprise information pertaining to the orientation of the reference object 102. As an example, the appearance may comprise information about how the reference object 102 is rotated.

Each reference object 102 of the plurality of reference objects may have a position and orientation in the coordinate system associated therewith. Reference objects 102 which are nontemporal, may be assigned its position and orientation during a calibration process, performed before the reference object can be used by the electronic device 110. Reference objects 102 which are temporal may have its position and orientation in the coordinate system continuously updated as it is moved around in the real-world. The position and orientation of the reference object in the coordinate system may be encoded in the machine-readable optical label which may constitute the reference object 102. Thus, the position and orientation of the reference object 102 may be extracted from the image of the reference object.

The plurality of reference objects may point to the same domain, offering a variety of "entry points" for the electronic device to calibrate itself into the domain's default coordinate system. In this case, each reference object may specify a unique reference object id, as described above, or only implicitly specify such a unique id, but having it computable from some other visual feature of the reference object, such as its color, according to some agreed-upon mechanic of the scheme. However, reference object ids might still be eschewed altogether even in the presence of a plurality of reference objects, such as for example by encoding useful information (e.g., the location of the reference object in the default coordinate system) directly into the contents of a reference object's code.

In a non-limiting example, the generation of reference object ids via color-coding may be useful in a setting with few reference objects, such as a home office or playroom.

The electronic device 110 to be located in the coordinate system (as well as the electronic device already located in the coordinate system 114) is herein illustrated in broken lines to indicate that it may not constitute a part of the system 100. However, it should be noted that the electronic devices that can be located in the coordinate system may be any suitable electronic device, not just mobile phones as illustrated herein. For example, the electronic device 110 may be a smartphone, a tablet, a laptop, a smart watch, smart glasses, AR glasses, AR lenses or any other suitable device. The electronic device 110 may communicate with the domain (further described below) via wireless connection, such as a Bluetooth connection, via a WiFi Network or a mobile network (e.g., 3G, 4G, 5G, or the like).

The system 100 further comprises a domain 104. The domain 104 may be interpreted as a remote server or location in the cloud which manages and controls the system. The domain 104 may serve as a centralized hub of the system 100 in that it communicates with the plurality of reference objects 102, and any electronic devices 110 which are located in the coordinate system, as illustrated by the arrows in Fig. 1.

The domain 104 may host one or more virtual spaces. The one or more virtual spaces may be defined by the coordinate system as mentioned above. Each virtual space may have its own relative coordinate system. Each relative coordinate system may have a well-defined relation to the coordinate system. Each virtual space may host a plurality of interacting electronic devices. Each virtual space may have an associated sub-address for allowing the electronic device that is to be located in the coordinate system (or virtual space) 110 to specify the specific virtual space. The domain may be configured to keep track of electronic devices located in the coordinate system. Further, in each virtual space it is hosting, the domain may keep track of one or more electronic devices that are connected to the respective virtual space. Keeping track of the electronic devices may be performed by receiving movement data from the plurality of electronic devices. Further, the domain may update the position and/or orientation of the electronic devices which are connected to the coordinate system (or virtual space) based on the received movement data. The movement data may be obtained by sensors in each electronic device, such as accelerometer and gyroscope. The position and orientation of the electronic device may be defined in relation to a local coordinate system of the electronic device, having its origin in an origin of the camera of the electronic device.

The domain 104 may comprise a server 106 for performing control and operations of the system, and a database 108. The server 106 may comprise circuitry. The circuitry may physically comprise one single circuitry device. Alternatively, the circuitry may be distributed over several circuitry devices. The server 106 may further comprise a transceiver. The circuitry may be communicatively connected to the transceiver and a memory. The circuitry may comprise a data bus, and the circuitry may communicate with the transceiver and/or the memory via the data bus.

The circuitry may be configured to carry out overall control of functions and operations of the server 106. The processor may be included in the circuitry. The processor may for example be a central processing unit (CPU), microcontroller, or microprocessor. The processor may be configured to execute program code stored in the memory, in order to carry out functions and operations of the server 106.

The transceiver may be configured to enable the server 106 to communicate with other devices, such as the electronic device 110. The transceiver may both transmit data from and receive data to the server 106.

The memory may be a non-transitory computer-readable storage medium. The memory may comprise one or more of a buffer, a flash memory, a hard drive, a removable media, a volatile memory, a non-volatile memory, a random access memory (RAM), or another suitable device. In a typical arrangement, the memory may include a non-volatile memory for long term data storage and a volatile memory that functions as system memory for the server 106. The memory may exchange data with the circuitry over the data bus. Accompanying control lines and an address bus between the memory and the circuitry also may be present.

Functions and operations of the server 106 may be implemented in the form of executable logic routines (e.g., lines of code, software programs, etc.) that are stored on a non-transitory computer readable recording medium (e.g., the memory) of the server 106 and are executed by the circuitry (e.g., using the processor). The circuitry may be configured to execute different functions corresponding to different steps of the method described below in connection with Fig. 2. The processor of the circuitry may be configured to execute program code portions stored on the memory, wherein the stored program code portions correspond to the different functions. Furthermore, the functions and operations of the circuitry may be a stand-alone software application or form a part of a software application that carries out additional tasks related to the circuitry. While the described functions and operations may be implemented in software, such functionality may as well be carried out via dedicated hardware or firmware, or some combination of one or more of hardware, firmware, and software.

The domain 104 may be associated with an address which defines how/where to access the domain 104. For example, the address of the domain may be used by the electronic device 110 to be located in the coordinate system, or more specifically, to connect to one of the one or more virtual spaces that the domain hosts, in order to access the domain 104. The electronic device may obtain the address from the reference object. Alternatively, the electronic device may obtain the address from an application that the electronic device uses to connect to a virtual space. The database 108 may comprise entries for the plurality of reference objects 102. Each entry may comprise the reference object identification, a position and orientation in the coordinate system of the corresponding reference object, and the known physical dimensions and appearance of the corresponding reference object. The entries of the respective reference object may be accessed by using the reference object identification. Hence, the position and orientation in the coordinate system of a reference object, as well as its known physical dimensions and appearance may be accessed by transmitting the reference object identification to the domain. Upon receiving the reference object identification, the domain may transmit back the above-mentioned information of the reference object to the electronic device. The electronic device may then determine a relative distance and orientation between itself and the reference object based on the received information and the captured image of the reference object. Finally, the electronic device may determine its position and orientation in the coordinate system based on the determined relative distance and orientation to the reference object. These steps are further described in connection to Fig. 2.

The database 108 may further comprise a list of pairs of coordinate system ids and coordinate transforms, where the first element of the pair is the coordinate system indexing the given reference object, and the second element of the pair locates the reference object inside the coordinate system. The database 108 may further comprise possible metadata about the reference object or pointers thereto. The database 108 may further comprise a table whose rows are indexed by the unique coordinate system ids, with a column for the human-readable description of the coordinate system, a column for coordinate system metadata or pointers thereto, a column comprising a list of the reference object ids of reference objects that indexed by the coordinate system. The database 108 may further comprise a table whose rows are indexed by ordered pairs of coordinate system ids such that the corresponding coordinate systems bear a fixed spatial relationship and for which the corresponding coordinate transform is known to the database, with this coordinate transform encoded in a column of the table. The central domain may be online or part of a private network.

Each entry of the database 108 for temporal reference objects 102 may further comprise a virtual space identification identifying the virtual space to which the electronic device which is already located in the coordinate system is connected to. Nontemporal reference objects 102 may have a predetermined virtual space identification associated therewith. The virtual space identification may comprise the address to the domain and the sub-address to the virtual space in the domain.

Each reference object 102 of the plurality of reference objects may further comprise the address to the domain 104. This allows the electronic device 110 which scans (i.e., captures an image of) the reference object to access the domain 104. The reference object identification may comprise the address to the domain 104, as well as the position and orientation of the reference object 102 in the virtual space.

One virtual space may have one or more reference objects 102 associated therewith. In other words, one or more reference objects may be used to locate the electronic device 110 in the same virtual space. In turn, one reference object 102 may be associated with one virtual space. In such case, the reference object 102 may comprise information pertaining to which virtual space among the plurality of virtual spaces (if the domain hosts a plurality of virtual spaces) that the electronic device 110 should be located in. Alternatively, one reference object 102 may be associated with a plurality of virtual spaces. The plurality of virtual spaces associated with one reference object 102 may be different copies of the same virtual space. As an example, multiple copies of the same virtual space may be hosted by the domain 104 for managing a number of users that are connected through an electronic device to each virtual space, e.g., by spreading them out on different copies of the same virtual space. Alternatively, the plurality of virtual spaces associated with one reference object 102 may be completely different virtual spaces. In case one reference object 102 is associated with a plurality of virtual spaces, the electronic device 110 or the domain 104 may determine which virtual space the electronic device is to be connected to.

The domain 104 may be distributed over multiple devices. For example, the domain 104 may comprise a first server hosting the coordinate system and communicatively connected to the database 108 for managing the communication with electronic devices that are to be located in the coordinate system. A second server, which may be part of the same domain, or a separate domain, may host the virtual spaces, which are utilizing the coordinate system hosted by the first server, for managing, e.g., virtual objects in augmented reality worlds of the virtual spaces.

The domain 104 may comprise information about a plurality of coordinate systems. In such a case, each coordinate system might be identified by a unique id, as well as other associated data that may comprise, for example, a human-readable description and other arbitrary machine-readable metadata (e.g., JSON).

A reference object may fall under the purview of several distinct coordinate systems, in the sense that a device at that reference object might reasonably benefit from learning its location with respect to any one of a given set of local coordinate systems. The domain 104 may maintain a list of such coordinate systems for each reference objects, and may list several locations, each one paired with a coordinate system id upon responding to a query concerning the reference object's location. A device receiving this response is then free to compute its own location in any of these coordinate systems, as described in the method of the present inventive concept.

If a reference object is associated to a coordinate system in this manner, one can say that the reference object "indexes" the coordinate system. One can also say that the given coordinate system "indexes" the reference object, as well.

The domain may offer an API call to access additional data concerning a coordinate system as named by its unique coordinate system id. Such information may comprise the human-readable description (or name) of the coordinate system and the arbitrary metadata associated to the coordinate system. The metadata may be organized into cells or volumetric chunks covering the coordinate system, and individual cell-by-cell access may be granted, such as to avoid unnecessarily large download volumes. Other indexing schemes may be imagined, such as specifying different degrees of resolution for data belonging to the same cell, or by allowing cells to contain their own cell-based subdivisions, etc.

The metadata associated to a coordinate system may include topographic information, geographic landmarks and human-readable names, local texture, surface normal, or lighting information, the position or estimated position of broadcasting electronic devices such as a Wi Fi routers or ultrawide band (UWB) devices on the map (as may serve an electronic device to further situate itself), the locations of indexed reference objects, GPS coordinates of landmarks or reference objects, and so on. The metadata may comprise several files, each with their own type extension. The API may provide sub-functionalities for browsing the filenames and extensions.

The domain may also maintain a table with known coordinate transforms between pairs of coordinate systems, as indexed for example by pairs of coordinate system ids, for which such a transform is known.

To avoid storing all possible pairs while maintaining a sufficient set of transforms from which all known transforms may be determined, the domain may choose any number of standard efficient methods, such as maintaining a (spanning) tree-like or star-like system of pairs for each connected cluster of coordinate systems in which all coordinate transforms are (theoretically) known for each pair in the cluster.

The domain may offer an API functionality to enable a device to query about the known relationship (i.e., coordinate transform) or lack thereof between two coordinate systems, as identified for example by their coordinate system ids.

For coordinate systems that bear some fixed relationship to standard local or global positioning formats (i.e., that are not affixed to an object that is moveable with respect to these latter systems), and for which the fixed relationship is known, the domain may provide convenience API methods that enable a client device to convert coordinates in that system to equivalent coordinates in the standard system, and vice-versa provide a reverse conversion from coordinates of the standard system to coordinates of the domain's system. For example, this may enable a device to convert coordinates in one of the domain's coordinate systems to GPS coordinates, and back.

Once a device has located itself in one or more coordinate systems a device may be free to make use of or forward this information to a 3rd party API as it sees fit. Hence, the positioning protocol may be decoupled, by default, from any potential applications of the positioning, with no a prioris being imposed on the participating device, that is free to engage and disengage with the domain at any time.

This in particular allows the device to make use of features of the method only to the degree that it wishes, and for the "software footprint" of the method on the device to be small.

After establishing a position and orientation in a coordinate system a device may in particular keep updating this known location by use of its onboard sensors, e.g., via built-in SLAM (Simultaneous Location and Mapping) technology, i.e., by use of its accelerometers, gyroscopes, photogrammetric abilities, odometers, combination thereof, and preprogrammed software relating to the parsing and combination of such.

To meet its further positioning needs a device might additionally make use of nearby topography or other feature points or other known nearby reference objects, as downloaded via the domain coordinate system metadata, and possibly in combination with other sensors such as SLAM or such as its GPS unit, to help it keep track of its evolving location. Moreover, a device may keep on making requests for new (relevant) metadata as its location evolves by use of the metadata API features already described.

In other words, a device might use the presence of a reference object and of the online domain to "bootstrap" itself into a situation in which keeping track of its evolving location at a high level of accuracy may be feasible in a resilient and persistent fashion, despite ongoing displacement, even while such a degree of accuracy remained out of reach before calibration, and without ongoing displacement.

The system need not to comprise of only a single domain. Indeed, a feature of the system may be that entirely private, wall-offed, or independent domains may be constituted. Besides reasons of security, such a feature may for example be useful in physically remove environments with limited online connectivity. A reference object may also list a plurality of domain addresses for a scanning device or application on such a device to choose from.

Certain coordinate systems or their metadata or portions thereof may be kept private from devices that do not present valid credentials in the form, for example, of an associated authorization key, or similar. The matching public key(s) serving to verify the authorization key(s) might for example be listed in the database 108 or embedded within portions of the metadata.

For example, a coordinate system indexed at a given reference object may not be listed for devices that scan the reference object, but that do not present an associated authorization key; or such a coordinate system may be listed, but its metadata, or specific portions thereof, might not be shared.

Coordinate system metadata may also be stored on remote domains that wish to monitor the granting of access themselves, in order to increase security guarantees.

In particular, these techniques may allow sensitive topographies, such as corresponding the inside of homes or private enterprises, to be uploaded and to participate in the benefits of the system in a secure manner.

The domain may further facilitate the addition of new reference objects by users of the system.

Fig. 2 is a flow chart illustrating the steps of the method 200 for determining a position and orientation of an electronic device in a coordinate system. Below, the different steps are described in more detail. Even though illustrated in a specific order, the steps of the method 200 may be performed in any suitable order, in parallel, as well as multiple times.

An image of a reference object is captured S202, by a camera of the electronic device. The image may be a single image of the reference object. Alternatively, the image may be a series of images, such as a video feed of the reference object.

An address where to access a domain is extracted S204 from the image of the reference object. The reference object may be a machine-readable optical label. Extracting the address, or any other information from the reference object may thus be performed by reading the machine-readable optical label by the electronic device. The address to the domain may be encoded in the machine-readable optical label. The domain may comprise information pertaining to a position and orientation of one or more reference objects in the coordinate system and known physical dimensions and appearance of the one or more reference objects.

A reference object identification may be extracted S206 from the image of the reference object. The reference object identification may be extracted by being computed from the captured image locally on the electronic device.

For the reference object, the position and orientation in the coordinate system and the known physical dimensions and appearance is obtained S208, by accessing the domain. Put differently, the domain may provide the position and orientation in the coordinate system of the reference object to the electronic device.

Obtaining S208 the position and orientation as well as the known physical dimensions and appearance may comprise sending S220, by the electronic device, the reference object identification to the domain.

Obtaining S208 the position and orientation as well as the known physical dimensions and appearance may comprise scanning the reference object's unique id and sending it to the domain. The domain's database may include a table whose rows are indexed by reference object unique ids, containing the reference object's location in column and its dimensions data in another column.

Other data may be associated to reference objects may be recorded by the database in the same table or in a separate table indexed by reference object ids. For example, the estimated GPS coordinates of a reference object may be stored.

The domain may comprise a database having entries for a plurality of reference objects, wherein each entry may comprise a reference object identification, a position and orientation in the coordinate system of the corresponding reference object and known physical dimensions and appearance of the corresponding reference object. Obtaining S208 the position and orientation as well as the known physical dimensions and appearance may further comprise accessing S222, by the domain, the entry in the database corresponding to the reference object identification.

A relative distance and orientation of the electronic device to the reference object is determined S210, based on the known physical dimensions and appearance of the reference object and apparent dimensions and appearance of the reference object as imaged in the captured image. Determining S210 the relative distance and orientation of the electronic device may be performed by the electronic device.

The position and orientation of the electronic device in the coordinate system is determined S212, based on the position and orientation of the reference object in the coordinate system and the determined relative distance and orientation of the electronic device to the reference object. Determining S212 the position and orientation of the electronic device in the coordinate system may be performed by the electronic device.

The electronic device may be located S214 in the coordinate system at a position and orientation corresponding to the determined position and orientation of the electronic device in the coordinate system. Locating S214 the electronic device in the coordinate system may be performed by the domain.

The electronic device may be connected S218 to a virtual space, defined by the coordinate system, at the determined position and orientation in the virtual space.

The domain may host a plurality of virtual spaces. Which virtual space among the plurality of virtual spaces the electronic device is to be connected to may be determined S216. This may be determined 216 by extracting a virtual space identification from the reference object. Alternatively, this may be determined 216 based on information associated with the electronic device, such as which application the electronic device uses in order to be located in the virtual space, or a user input stating which virtual space to connect to.

The steps of the method may be implemented in computer program code portions which when executed on a device having processing capabilities performs the steps of the method.

For example, some of the steps may be performed by the electronic device, and some of the steps may be performed by the server in the domain as described above in connection with Fig. 1.

Additionally, variations to the disclosed variants can be understood and effected by the skilled person in practicing the claimed invention, from a study of the drawings, the disclosure, and the appended claims.

## Claims

1. A computer implemented method (200) for determining a position and orientation of an electronic device in a coordinate system, the method (200) comprising:
capturing (S202), by a camera of the electronic device, an image of a reference object;
extracting (S204) from the image of the reference object an address where to access a domain comprising information pertaining to:
a position and orientation of one or more reference objects in the coordinate system, and
known physical dimensions and appearance of the one or more reference objects;
for the reference object, obtaining (S208), by accessing the domain, the position and orientation in the coordinate system and the known physical dimensions and appearance;
determining (S210) a relative distance and orientation of the electronic device to the reference object based on the known physical dimensions and appearance of the reference object and apparent dimensions and appearance of the reference object as imaged in the captured image; and
determining (S212) the position and orientation of the electronic device in the coordinate system based on the position and orientation of the reference object in the coordinate system and the determined relative distance and orientation of the electronic device to the reference object.

2. The method (200) according to claim 1, further comprising connecting (S218) the electronic device to a virtual space, defined by the coordinate system, at the determined position and orientation in the coordinate system.

3. The method (200) according to claim 2, wherein the domain hosts a plurality of virtual spaces,
wherein the method (200) further comprises determining (S216) to which virtual space among the plurality of virtual spaces the electronic device is to be connected.

4. The method (200) according to any of the claims 1 to 3, further comprising extracting (S206) from the image of the reference object a reference object identification,
wherein obtaining (S208) the position and orientation as well as the known physical dimensions and appearance comprises sending (S220) the reference object identification to the domain.

5. The method (200) according to claim 4, wherein the domain comprises a database having entries for a plurality of reference objects, wherein each entry comprises a reference object identification, a position and orientation in the coordinate system of the corresponding reference object, and known physical dimensions and appearance of the corresponding reference object,
wherein obtaining (S208) the position and orientation as well as the known physical dimensions and appearance further comprises accessing (S222) the entry in the database corresponding to the reference object identification.

6. A system (100) for allowing an electronic device (110) to be located in a coordinate system, the system (100) comprising:
a plurality of reference objects (102) each having:
a reference object identification, and
known physical dimensions and appearance; and
a domain (104) hosting the coordinate system, the domain (104) being associated with an address and comprising a database (108) having entries for the plurality of reference objects, wherein each entry comprises the reference object identification, a position and orientation in the coordinate system of the corresponding reference object, and the known physical dimensions and appearance of the corresponding reference object;
wherein each reference object (102) further comprises the address to the domain (104).

7. The system (100) according to claim 6, wherein the plurality of reference objects (102) are reference objects located at various locations in the real-world.

8. The system (100) according to claim 7, wherein the plurality of reference objects (102) are nontemporal or permanent.

9. The system (100) according to any of the claim 6 to 8, wherein the plurality of reference objects (100) are machine-readable optical labels.

10. The system (100) according to any of the claims 6 to 9, wherein the domain (108) hosts a plurality of virtual spaces all being defined by the coordinate system.

11. The system (100) according to claim 10, wherein the domain (104) is configured to keep track of a plurality of electronic devices in each virtual space.

12. The system (100) according to any of the claims 6 to 11, wherein the domain is configured to keep track of a plurality of coordinate systems, including coordinate transforms between pairs of such.

13. The system (100) according to any of the claims 6 to 12, wherein the system (100) further comprises a temporal reference object (102) displayed on a display (116) of an electronic device located in the coordinate system,
wherein the temporal reference object (102) having a reference object identification, known physical dimensions and appearance, as well as the address to the domain (104), and
wherein the database (108) further having an entry for the temporal reference object (102), wherein the entry comprises the reference object identification of the temporal reference object (102), a position and orientation in the coordinate system of the temporal reference object (102), and the known physical dimensions and appearance of the temporal reference object as displayed on the display (116) of the electronic device (116).

14. A non-transitory computer-readable recording medium having recorded thereon program code portion which, when executed at a device having processing capabilities, performs the method (200) according to any one of the claims 1 to 5.
